# NEUE EUROPÄISCHE PATENTSCHRIFT

(11) **EP 2 367 962 B2**
(45) Veröffentlichungstag und Bekanntmachung des Hinweises auf die Entscheidung über den Einspruch: **18.07.2018**
(45) Hinweis auf die Patenterteilung: 29.07.2015
(21) Anmeldenummer: 09795435.8
(22) Anmeldetag: 18.12.2009
(51) Int. Cl.: B21D 22/02, C21D 9/48, C21D 9/54, C21D 9/60, B21D 22/26, B21D 22/20, B21D 37/16, B62D 25/04, C21D 7/13, C21D 8/02, C21D 8/04, C21D 1/10, C21D 1/42, C21D 1/673

(54) **VERFAHREN ZUM HERSTELLEN PARTIELL GEHÄRTETER BAUTEILE AUS STAHLBLECH**
METHOD FOR PRODUCING PARTIALLY HARDENED COMPONENTS FROM SHEET STEEL
PROCÉDÉ DE FABRICATION DE PIÈCES EN TÔLE D'ACIER PARTIELLEMENT TREMPÉES

(30) Priorität: 21.09.2009 DE 102009042387; 19.12.2008 DE 102008063985; 19.12.2008 DE 202008016877 U
(43) Veröffentlichungstag der Anmeldung: 28.09.2011
(73) Patentinhaber: voestalpine Metal Forming GmbH, 3500 Krems an der Donau (AT); Bayerische Motoren Werke Aktiengesellschaft, 80809 München (DE)
(72) Erfinder: HARTMANN, Dieter, 73557 Mutlangen (DE); PFESTORF, Markus, 85375 Neufahrn (DE); NESSEL, Florian, 73525 Schwäbisch Gmünd (DE); KLEINHANS, Sven, 73527 Schwäbisch Gmünd (DE)
(74) Vertreter: Naefe, Jan Robert
(86) Internationale Anmeldenummer: PCT/EP2009/067560
(87) Internationale Veröffentlichungsnummer: WO 2010/076247

(56) Entgegenhaltungen:
- WO-A1-2007/017579
- DE-A1- 19 723 655
- DE-A1- 19 743 802
- DE-B3-102005 025 026
- DE-U1-202008 016 877
- DE-U1-202008 016 877
- US-A1- 2005 006 828
- Thomas Tröster: "Innovative Warmumformung" In: Klaus Siegert: "Neuere Entwicklung in der Blechumformung" 11. Mai 2004 (2004-05-11), MAT INFO , Deutschland , XP009130353 ISBN: 388355331X , Seiten 51-65 das ganze Dokument

## Beschreibung

Die Erfindung betrifft ein verfahren zum Herstellen von partiell gehärteten Bauteilen aus Stahlblech.

Um den steigenden Anforderungen im Fahrzeugbau hinsichtlich der Sicherung der Fahrgastzelle im Crash-Fall als auch zur Gewichtseinsparung gerecht zu werden und der CO₂-Emission entgegenzuwirken, wird in Fahrzeugen mit zunehmender Tendenz der Einsatz von hochfesten Stählen erforderlich.

Derartige hochfeste Stähle sind beispielsweise Tripstähle oder Mehrphasenstähle, wobei deren Umformbarkeit jedoch teilweise komplexe Bauteile nicht zulässt.

Es ist ferner bekannt, Bauteile aus sogenannten presshärtenden Stählen herzustellen, wobei hierbei ein direktes und ein indirektes Verfahren unterschieden werden. Beim direkten Verfahren wird eine Stahlplatine aufgeheizt und die aufgeheizte Stahlplatine in einem Werkzeug umgeformt und dort auch gleichzeitig abschreckgekühlt und dadurch eine hohe Härte erzielt. Beim indirekten Verfahren wird das Bauteil bereits fertig geformt, anschließend aufgeheizt und das aufgeheizte Bauteil anschließend in einer Matrize abgekühlt. Das indirekte Verfahren lässt gegenüber dem direkten Verfahren komplizierte Geometrien zu, da das Bauteil in einem herkömmlichen, mehrstufigen Umformprozess vor dem Härten verarbeitet werden kann, während beim direkten Verfahren nur ein Pressenhub für die Umformung zur Verfügung steht.

Bei dieser sogenannten Abschreckhärtung wird durch sehr rasches Abkühlen mit Geschwindigkeiten über der sogenannten kritischen Härtegeschwindigkeit ein bestimmtes Stahlgefüge quasi "eingefroren", wobei bestimmte innere Spannungszustände im Werkstoff erzeugt werden. Diese inneren Spannungszustände in Verbindung mit diesem Gefüge erzeugen die Härte. Wird ein solcher Stahl über bestimmte Temperaturen hinaus wieder erhitzt und langsam abgekühlt, können die Härte- bzw. die Spannungszustände teilweise bis vollständig wieder beseitigt werden. Gleiches gilt, wenn der Stahl bzw. der Stahlwerkstoff teilbereichsweise nicht abgeschreckt sondern langsamer, d. h. mit einer Geschwindigkeit unter der kritischen Härtegeschwindigkeit abgekühlt wird.

Bei einem Fahrzeug-Crash kann es vorkommen, dass aufgrund der auftretenden Spannungen, die schwerwiegend auf den Flanschbereich des gehärteten Bauteils einwirken, es zum Versagen des Bauteils durch Einreißen des Bauteilflansches kommt. Bei einigen dieser Bauteile ist eine Einflussnahme auf die Duktilität (Streckgrenze, Zugfestigkeit, Dehnung) sowie bei einigen Teilen auch nur eine bereichsweise Einflussnahme auf die Duktilität der Bauteile daher erforderlich bzw. vorteilhaft.

Aus der DE 197 23 655 A1 ist ein Verfahren zur Herstellung von. Stahlblechprodukten bekannt, bei dem ein Stahlblechprodukt in einem Paar gekühlter Werkzeuge geformt wird, solange es heiß wird, und in eine martensitische Struktur gehärtet wird. In den Bereichen, in denen der Stahl bearbeitet werden soll, beispielsweise gestanzt werden soll, soll dieser Stahl im Flussstahlbereich gehalten werden. Hierzu sollen Einsätze in den Werkzeugen verwendet werden, die ein schnelles Abkühlen und dadurch eine martensitische Struktur verhindern.

Aus der DE 20 2008 016 877 U1 ist eine Vorrichtung zum Erzeugen partiell gehärteter Stahlblechbauteile bekannt, wobei in den Kühlschalen zum Kühlen der erhitzten Bauteile werkstückseitig in den Bereichen, in denen eine verringerte oder keine Härte des Bauteils gewünscht ist, Ausnehmungen in der Oberfläche vorhanden sind und die Ausnehmungen zur Erzeugung eines Gaspolsters während des Pressens der Platine oder des Bauteils über Gaszuführungs- und Gasabführungsbohrungen verfügen.

Durch das Erhöhen der Duktilität bestimmter Teilbereiche des Bauteils können bei einem Crash-Fall auftretende Spannungen gezielter auf das Bauteil verteilt werden, ohne dass das Bauteil in seinem Profilquerschnitt allzu sehr geschwächt wird. Durch das vorbeschriebene partielle Presshärten können z. B. bei einer A-Säule eines Kraftfahrzeuges die Kräfte bei einem seitlichen Aufprall teilweise im unteren Bereich abgefangen werden, ohne hierbei den Fahrgast im oberen Bereich der vollen Wucht auszusetzen.

Aufgabe der Erfindung ist es, die Härte oder Duktilität von insbesondere pressgehärteten Bauteilen auf einem genau definierten und genau lokalisierten Teilbereich zu beeinflussen, ohne den kompletten Teilquerschnitt zu schwächen oder sonst negativ zu beeinflussen.

Die Aufgabe wird mit Verfahren mit den Merkmalen des Anspruchs 1 gelöst.

Es ist zudem eine Aufgabe der Erfindung eine Vorrichtung zum Durchführen der Verfahren zu schaffen.

Die Aufgabe wird mit einer Vorrichtung mit den Merkmalen des Anspruchs 2 gelöst.

Vorteilhafte Weiterbildungen sind in den hiervon abhängigen Unteransprüchen gekennzeichnet.

Das erfindungsgemäße Verfahren sieht vor, zur Erhöhung der Duktilität in bestimmten Teilbereichen des gehärteten Bauteils induktiv auf dieses Bauteil einzuwirken. Dabei kann nach dem erfindungsgemäßen Verfahren in unterschiedlicher Weise induktiv dadurch eingewirkt werden, dass ein im direkten Verfahren umgeformtes und pressgehärtetes Bauteil in einer zweiten Fertigungsstufe maßlich fixiert wird und in den Bereichen, in denen eine erhöhte Duktilität gewünscht ist, in der Form eine Induktionsspule integriert ist, die in diesem Bereich das Bauteil partiell mit Temperaturen zwischen 300°C bzw. 400°C und 600°C erwärmt. Nachdem das Bauteil im Bereich der Induktionsspule die gewünschte Temperatur erreicht hat, wird die Induktionsspule ausgeschaltet und das Bauteil mittels wassergekühlter Kühlschalen sehr schnell auf Temperaturen unter 300°C gekühlt, wonach das Bauteil ohne einen maßlichen Verzug aus der Vorrichtung oder dem Werkzeug entnommen werden kann. Es ist hierbei auch möglich, das Bauteil auf eine Schale aufzulegen und die Induktionsspule von außen auf das Bauteil aufzusetzen und wieder abzuheben. Wesentlich ist, dass das Bauteil ohne maßlichem Verzug mit der Spule partiell erwärmt werden kann.

Bei der Erfindung ist von Vorteil, dass durch das gezielte Einsetzen von Induktoren die Duktilität des Bauteiles partiell sehr genau und zuverlässig eigestellt werden kann.

Die Erfindung wird anhand einer Zeichnung beispielhaft erläutert. Es zeigen dabei:
- Figur 1:: schematisch ein Werkzeug mit zwei Werkzeugschalen, die mit einer Schematisch gezeigten Wasserkühlung ausgebildet sind;
- Figur 2:: das Werkzeug nach Fig. 1 mit in den Werkzeugschalen benachbart zum Bauteil angeordneten Induktionsspulen;
- Figur 3:: eine Haltevorrichtung für ein Bauteil mit einer auf das Bauteil aufschwenkbaren Induktionsspule oder Kühlschale;
- Figur 4:: das in Fig. 3 behandelten Bauteil mit dem durch die Induktionsspule induktiv Erwärmten Anlassbereich;
- Figur 5:: ein Werkzeug nach Fig. 3, wobei eine Induktionsspule im Werkzeug angeordnet ist und von der Innenseite auf ein Bauteil einwirken kann;
- Figur 6:: das in Fig. 5 im Werkzeug angeordnete Bauteil mit dem durch die Induktionsspule erwärmten Bereich, wobei ein Kühlbacken gezeigt ist, der mit einer Verschwenkeinrichtung nach Fig. 3 nach dem induktiven Erwärmen an das Bauteil bringbar ist.

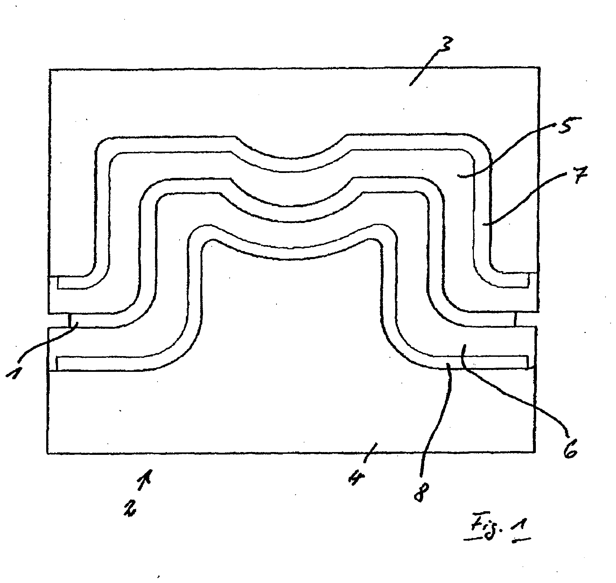

In einer ersten Ausführungsform sieht das Verfahren vor, ein Bauteil oder eine Platine 1 in einem vorgeschalteten Ofen auf eine Temperatur oberhalb der Austenitisierungstemperatur, beispielsweise 910°C zu erhitzen und im Anschluss im heißen Zustand in einer ersten Fertigungsstufe (Fig. 1) im direkten Verfahren umzuformen und presszuhärten bzw. im indirekten Verfahren in einem Werkzeug 2 das Bauteil 1 einzulegen und dort mittels je einer am Werkzeugoberteil 3 und am Werkzeugunterteil 4 angeordneten Kühl- bzw. Formwerkzeugschale 5, 6 presszuhärten. Die Kühl- bzw. Förmhärteschalen 5, 6 sind formschlüssig oder im Wesentlichen formschlüssig an den Formwerkzeughälften 3, 4 angeordnet und besitzen vorzugsweise entsprechende Nuten oder Ausnehmungen 7, 8, welche als Kühlkanäle z.B. mit Wasser durchspült werden.

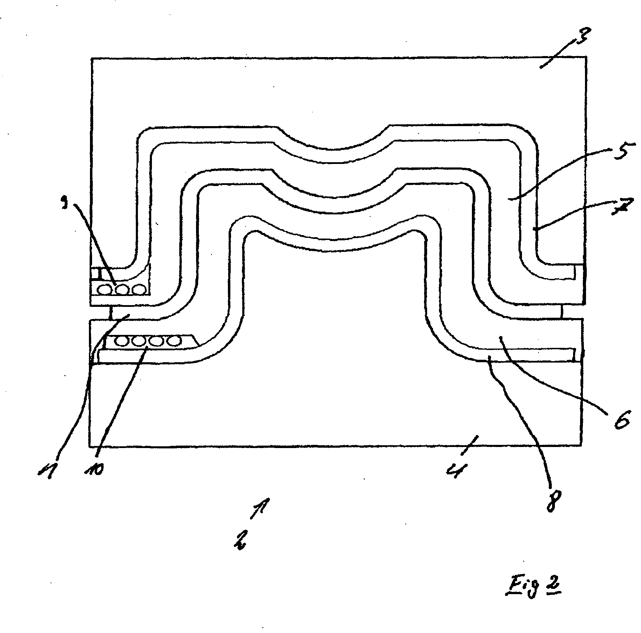

In einer zweiten Fertigungsstufe (Fig. 2) wird das pressgehärtete Bauteil mittels des Werkzeugoberteils 3 und des Werkzeugunterteils 4 maßlich fixiert. In den Bereichen, in denen eine erhöhte Duktilität des Bauteils gewünscht ist, hier die Flanschbereiche, sind in den Kühlschalen 5, 6 Induktionsspulen 9, 10 angeordnet.

Die Induktionsspulen 9, 10 sind in den Kühlschalen 5, 6 möglichst nah am zu erwärmenden Bautelil 1, beispielsweise in Einfräsungen angeordnet, was ermöglicht, dass das Bauteil in diesem Bereich partiell mit Temperaturen zwischen 300°C und 600°C, je nach gewünschtem Materialgefüge, erwärmt wird.

Das erfindungsgemäße Verfahren sieht hierbei vor, dass das Bauteil, nachdem es die gewünschte Temperatur durch Induktion erreicht hat, die Induktionsspule ausgeschaltet und das Bauteil mittels den Wasserkühlungen 7, 8 sehr schnell auf eine Temperatur unter 300°C abgekühlt wird, wonach das Bauteil dann ohne einen späteren maßlichen Verzug aus der Vorrichtung oder dem Werkzeug entnommen werden kann.

Bei dem Verfahren bzw. den zur Durchführung des Verfahrens verwendeten Vorrichtungen ist es von Vorteil, wenn die Induktionsspulen nicht direkt in den meist metallischen Kühlschalen gelagert werden, sondern die Induktionsspulen in nicht magnetischen Teilstücken der Kühlschalen eingebaut sind beispielsweise keramischen Teilen. Hierdurch wird zielgerichtet nur das jeweilige Stahlbauteil bzw. die Platine erhitzt, jedoch die Kühlschale selber nicht induktiv erhitzt, so dass mit der Wasserkühlung lediglich die Temperatur des aufgeheizten Bauteils bzw. der aufgeheizten Platine herabgesetzt werden muss.

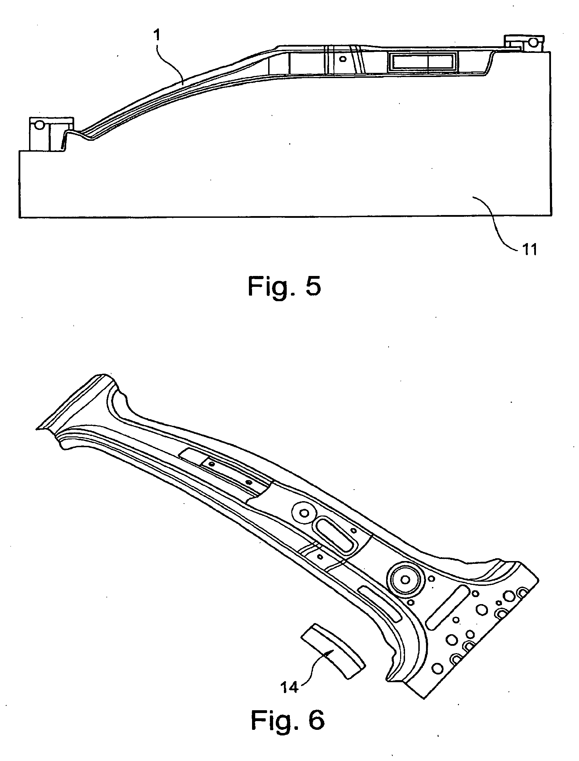

Nach der Entnahme aus dem Presshärtewerkzeug wird das Bauteil in einer zweiten Werkzeugstufe oder -vorrichtung eingelegt, wobei in dieser Fertigungsstufe die noch erwärmten Teilbereiche mittels auf das Bauteil 1 aufsetzbarer Kühlschalen (Fig. 6) bzw. Kühlbacken separat abgekühlt werden. Die Maßhaltigkeit der Bauteile wird durch das Fixieren in einem entsprechenden Werkzeugunterteil oder in einer entsprechenden der Form des Bauteils entsprechenden Vorrichtung gewährleistet.

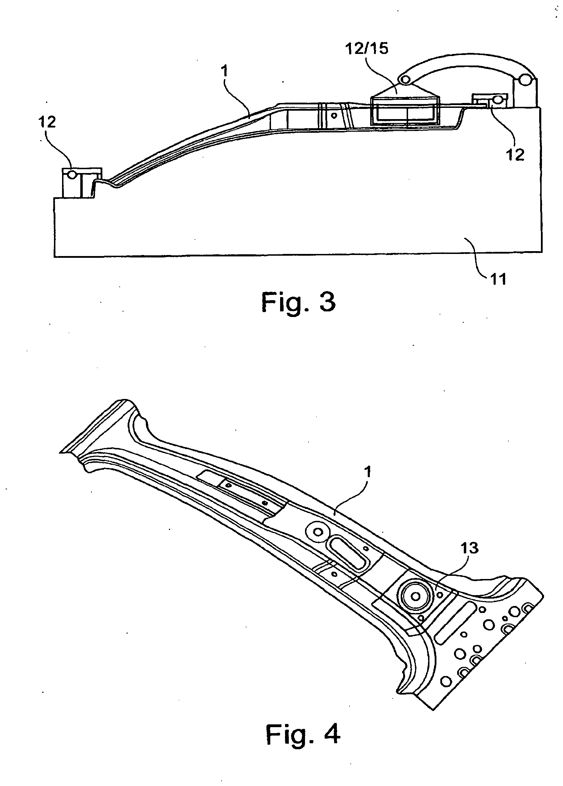

Bei einer weiteren vorteilhaften Ausführungsform des Verfahrens (Figuren 3 bis 6) wird ein im direkten oder indirekten Verfahren hergestelltes Bauteil 1 auf einen Halbschalenträger bzw. eine Halbschalenform 11 aufgelegt, wobei das Bauteil 1 in freien Endbereichen mit Spannvorrichtungen 12 an der Form gehalten wird. In einem Bereich, in dem das Bauteil duktiler ausgebildet werden soll, ist in dem Bereich, in dem das Bauteil 1 auf der Halbschale 11 aufliegt (Form), eine Induktionsspule vorhanden, welche auf das Bauteil 1 einwirkt. Zudem kann an der Halbschale 11 ein verschwenkbarer Kühlaufsatz 15 vorhanden sein, der nach dem erfolgreichen Erwärmen das Bauteil 1 übergreift und das Bauteil in dem erwärmten Bereich kühlt. Hierdurch wird ein sehr definiert induktiv erwärmter und duktilerer Anlassbereich 13 (Fig. 4) erzielt.

Bei einer weiteren Ausführungsform dieses Verfahrens (Figuren 5 und 6) wird anstelle eines verschwenkbaren Kühlaufsatzes 15 eine bewegliche Kühlbacke 14 verwendet.

Das erfindungsgemäße Verfahren sieht somit vor, gehärtetes Material in einem weiteren Schritt mittels Induktionsspulen, die in einem,gekühlten Werkzeug angeordnet sind, zu erweichen oder ungehärtetes Material mittels Induktionsspulen in einem gekühlten Werkzeug partiell zu härten oder gehärtetes Material mittels Induktionsspulen in einer Halbform oder von außen aufgebrachten Induktionsspulen partiell anzulassen und zu erweichen oder ungehärtetes Material in einer Halbform mit in der Halbförm angeordneten oder von außen aufbringbaren Induktionsspulen und ggf. Kühlbacken partiell zu härten.

Bei der Erfindung ist von Vorteil, dass das Aufteilen der Anfertigung auf zwei Prozessschritte es ermöglicht, die Herstellung der Bauteile mit duktileren Teilbereichen ohne eine wesentliche Erhöhung der Taktzeit zu realisieren. Zudem wird Energie durch die Verwendung nicht Magnetischer Kühlschalen eingespart, da nur das Bauteil und nicht die Schalen erwärmt werden. Zudem sind lange Haltezeiten möglich, da die Induktionsspule dank der stetigen Wasserkühlung nicht überhitzt werden kann, wobei sich die Induktionsspule unter der Oberfläche befindet und die Werkstückauflage dädurch nicht unterbrochen wird. Zudem wird die Induktionsspule unter der Schale vor Beschädigung und Korrosion bei der Fertigung geschützt.

### Bezugszeichenliste:

- 1: Bauteil/Platine
- 2: Werkzeug
- 3: Werkzeugoberteil
- 4: Werkzeugunterteil
- 5: Kühl- bzw. Formwerkzeugschale
- 6: Kühl- bzw. Formwerkzeugschale
- 7: Nuten/Ausnehmungen
- 8: Nuten/Ausnehmungen
- 9: Induktionsspulen
- 10: Induktionsspulen
- 11: Hälbschalenträger/Halbschalenform
- 12: Spannvorrichtungen
- 13: definiert induktiv erwärmter und duktiler Anlassbereich
- 14: bewegliche Kühlbacke
- 15: verschwenkbarer Kühlaufsatz

## Patentansprüche

1. Verfahren zum Herstellen eines Stahlblechbauteils mit Bereichen unterschiedlicher Härte oder Duktilität, wobei entweder
aus einer Platine das Stahlblech in einem Werkzeug kalt in das Bauteil (1) umgeformt und das umgeformte Bauteil (1) anschließend auf eine Temperatur oberhalb der Austenitisierungstemperatur aufgeheizt wird und zum Zwecke der Härtung in ein zweites Werkzeug (2) mit zwei Werkzeughälften eingelegt wird und in dem zweiten Werkzeug (2) abschreckgehärtet wird,
oder
wobei eine Platine auf eine Temperatur oberhalb der Austenitisierungstemperatur erhitzt wird und anschließend zum Zwecke der Umformung und Abschreckhärtung in ein Umform-Werkzeug (2) mit zwei Werkzeughälften eingelegt wird, dort umgeformt und abschreckgehärtet wird, wobei das gehärtete Bauteil (1) nach dem Ausformen in oder auf eine weitere Form verbracht wird, in oder auf der teilbereichsweise induktiv auf das Bauteil (1) derart eingewirkt wird, dass die vorhandene Härte teilweise oder vollständig beseitigt wird.

2. Vorrichtung zum Durchführen des Verfahrens nach Anspruch 1, **dadurch gekennzeichnet, dass** die Vorrichtung ein Werkzeug (2) umfasst, wobei das Werkzeug (2) zwei Formwerkzeughälften (3, 4) besitzt und diese Formwerkzeughälften (3, 4) zumindest eine Induktionsspule (9, 10) besitzt, die in der Formwerkzeughälfte (3, 4) angeordnet ist, wobei die Induktionsspule (9, 10) unterhalb der Auflageoberfläche für ein Werkstück bzw. Bauteil (1) so angeordnet ist, dass sie auf das Bauteil (1) induktiv einwirken kann, wobei das die Formwerkzeughälfte (3, 4) oder die Kühlschale (5, 6) ausbildende und das zumindest eine Induktionsspule (9, 10) umgebende Material ein nicht magnetisierbares Material ist.

3. Vorrichtung nach Anspruch 2, **dadurch gekennzeichnet, dass** die Formwerkzeughälfte (3, 4) eine Kühlschale (5, 6) umfasst, wobei die Kühlschale (5, 6) eine Oberfläche besitzt, die der Kontur eines gewünschten Bauteils (1) entspricht und an der Formwerkzeughälfte (3, 4) angeordnet ist, wobei die Induktionsspule (9, 10) in der Kühlschale (5, 6) unterhalb der an einem Bauteil (1) anliegenden Oberfläche angeordnet ist.

4. Vorrichtung nach Anspruch 2 oder 3, **dadurch gekennzeichnet, dass** die Induktionsspule (9, 10) innerhalb der Formwerkzeughälfte (3, 4) oder der Kühlschale (5, 6) in einem Einsatz aus einem nicht magnetisierbares Material gelagert ist, so dass bei der induktiven Aufheizung des Bauteils (1) kein magnetisierbares Material zwischen der Induktionsspule (9, 10) und dem Bauteil (1) angeordnet ist.

5. Vorrichtung nach einem der Ansprüche 2 bis 4, **dadurch gekennzeichnet, dass** die Formwerkzeughälfte (3, 4) und/oder die Kühlschale (5, 6) Bohrungen zum Durchleiten von Kühlmedium besitzt.

## Claims

1. A method for producing a sheet steel component with regions of different hardness or ductility, in which either
the sheet steel is cold formed out of a mill bar into the component (1) in a tool and the formed component (1) is then heated to a temperature above the austenitization temperature and for hardening, is inserted into a second tool (2) with two tool halves and is quench hardened in the second tool (2)
or
a mill bar is heated to a temperature above the austenitization temperature and then for forming and quench hardening, is inserted into a forming tool (2) with two tool halves and is formed and quench hardened therein, in which
after removal from the mold, the hardened component (1) is placed into or onto another form, in or on which the component (1) is acted upon inductively in some regions so that the existing hardness is partially or completely eliminated.

2. A device for executing the method according to claim 1, **characterized in that** the device includes a tool (2); the tool (2) has two forming tool halves (3, 4) and these forming tool halves (3, 4) has [sic] at least one induction coil (9, 10), which is situated in the forming tool half [sic] (3, 4); the induction coil (9, 10) is situated underneath the contact surface for a workpiece or component (1) so that it can inductively act on the component (1), wherein the material that composes the forming tool half (3, 4) or the mold cooling jacket (5, 6) and surrounds the at least one induction coil (9, 10) is a non-magnetizable material.

3. The device according to claim 2, **characterized in that** the forming tool half (3, 4) includes a mold cooling jacket (5, 6); the mold cooling jacket (5, 6) has a surface, which corresponds to the contour of a desired component (1) and is situated against the forming tool half (3, 4); and the induction coil (9, 10) is situated in the mold cooling jacket (5, 6) underneath the surface that rests against a component (1).

4. The device according to claim 2 or 3, **characterized in that** the induction coil (9, 10) is supported inside the forming tool half (3, 4) or the mold cooling jacket (5, 6) in an insert composed of a non-magnetizable material so that in the inductive heating of the component (1), there is no magnetizable material situated between the induction coil (9, 10) and the component (1).

5. The device according to one of claims 2 through 4, **characterized in that** the forming tool half (3, 4) and/or the mold cooling jacket (5, 6) has bores for conveying a cooling medium through.

## Revendications

1. Procédé pour fabriquer une pièce en tôle d'acier avec des zones de dureté ou de ductilité différente, dans lequel
ou bien
en partant d'une platine, la tôle d'acier est déformée à froid dans un outil pour donner la pièce (1), et la pièce (1) déformée est ensuite chauffée jusqu'à une température au-dessus de la température d'austénitisation et, dans le but de la faire durcir, elle est mise en place dans un second outil (2) présentant deux moitiés d'outil, et elle est durcie par trempe dans le second outil (2),
ou bien
une platine est chauffée jusqu'à une température au-dessus de la température d'austénitisation et ensuite, dans le but de la déformer et de la durcir par trempe, elle est mise en place dans un outil de déformation (2) présentant deux moitiés d'outil, elle y est déformée et durcie par trempe, dans lequel
la pièce durcie (1) est amenée après le démoulage dans ou sur un autre moule, dans ou sur lequel on agit par zone par voie inductive sur la pièce (1) de telle façon que la dureté existante est partiellement ou entièrement supprimée.

2. Appareil pour la mise en oeuvre du procédé selon la revendication 1, **caractérisé en ce que** l'appareil inclut un outil (2), ledit outil (2) possédant deux moitiés d'outil de moulage (3, 4) et ces moitiés d'outil de moulage (3, 4) possèdent au moins une bobine d'induction (9, 10) qui est agencée dans les moitiés d'outil de moulage (3, 4), ladite bobine d'induction (9, 10) étant agencée au-dessous de la surface d'appui pour une pièce à oeuvrer (1) de telle façon qu'elle est capable d'agir par voie inductive sur la pièce (1), dans lequel la moitié d'outil de moulage (3, 4), ou le matériau formant la coque de refroidissement (5, 6) et entourant au moins une bobine d'induction (9, 10) est un matériau qui ne peut pas être aimanté.

3. Appareil selon la revendication 2, **caractérisé en ce que** les moitiés d'outil de moulage (3, 4) incluent une coque de refroidissement (5, 6), ladite coque de refroidissement (5, 6) possédant une surface qui correspond au contour d'une pièce souhaitée (1) et qui est agencée sur les moitiés d'outil de moulage (3, 4), dans lequel la bobine d'induction (9, 10) est agencée dans la coque de refroidissement (5, 6) au-dessous de la surface appliquée contre une pièce (1).

4. Appareil selon la revendication 2 ou 3, **caractérisé en ce que** la bobine d'induction (9, 10) est logée à l'intérieur des moitiés d'outil de moulage (3, 4) ou de la coque de refroidissement (5, 6) dans un insert en un matériau qui ne peut pas être aimanté, de sorte que lors du chauffage inductif de la pièce (1) aucun matériau qui peut être aimanté n'est agencé entre la bobine d'induction (9, 10) et la pièce (1).

5. Appareil selon l'une des revendications 2 à 4, **caractérisé en ce que** les moitiés d'outil de moulage (3, 4) et/ou la coque de refroidissement (5, 6) possèdent des perçages pour la traversée d'un milieu de refroidissement.
